# EUROPEAN PATENT APPLICATION

(11) **EP 0 776 900 A1**
(43) Date of publication of application: **04.06.1997**
(21) Application number: 96308580.8
(22) Date of filing: 27.11.1996
(51) Int. Cl.: C07F 3/00, C08F 4/642

(54) **Olefin polymerization catalyst compositions**

(30) Priority: 01.12.1995 US 888465; 15.10.1996 US 729944
(71) Applicant: UNION CARBIDE CHEMICALS & PLASTICS TECHNOLOGY CORPORATION, Danbury, Connecticut 06817-0001 (US)
(72) Inventor: Hazin, Paulette Masri, Houston, Texas 77083 (US)
(74) Representative: Allard, Susan Joyce

(57) **Abstract**

This invention discloses a new procatalyst for olefin polymerization which is made from a mixture of magnesium alkoxide or aryloxide species and carbonated magnesium alkoxide or aryloxide species which is contacted with a titanium containing compound and a halogen containing compound.

## Description

### FIELD OF THE INVENTION

The field of the present invention is olefin polymerization catalysts and, more particularly, to solid olefin polymerization catalyst components which when used in a polymerization process yield polymers exhibiting higher bulk density and improved flowability.

### BACKGROUND OF THE INVENTION

Conventional Ziegler-Natta or coordination catalyst systems which exhibit high catalytic activity when used in olefin polymerizations consist of three components: an organometallic catalyst component, a solid catalyst component made up of a halogenated compound of a transition element of Groups IV-B to VI-B residing on a solid carrier which contains magnesium, and an electron donor. For convenience, the solid catalyst component is herein referred to as a procatalyst, the organometallic catalyst component as a cocatalyst, and the electron donor as a selectivity control agent (SCA). In the formation of the catalyst system, the SCA can be used separately, or alternately, it may be partially or totally complexed with the cocatalyst. The incorporation of a second electron donor in the procatalyst to further improve catalyst activity and stereospecificity is known. This second electron donor is typically referred to as an internal electron donor to distinguish it from the previously described SCA compound. The two electron donor compounds may be the same or different. Within these general limitations. the actual number of chemical combinations which can be used to form an active catalyst system is indeterminable.

One process of forming a procatalyst involves contacting a magnesium alkoxide or aryloxide with a titanium compound and a halogen source in the presence or absence of an internal electron donor. See, e.g., U.S. Patent No. 4,657,995 to Job. Another procedure employs a carbonated magnesium alkoxide or aryloxide as the magnesium source rather than a magnesium alkoxide or aryloxide. See U.S. Patent Nos. 5,411,926 to Wilson and 4,728,705 to Nestlerode et al.

The selection of the process depends upon polymer morphology, which encompasses both polymer size and shape. Of particular concern is the effect that polymer morphology can have on a polymerization due to higher bulk density, which results in an increase in polymer production rate in the reactor and, particularly, the efficiency of the process. One indication of the efficiency of a polymerization process is its extrusion or pelletization rate, which is the amount of finished polymer produced in a given time period, typically measured in pounds or thousands of pounds of polymer per hour.

When used for the polymerization of olefins, catalysts derived from carbonated magnesium alkoxide precursor generally yield polymer having higher bulk density than polymer obtained with a catalyst derived from magnesium alkoxide precursor. However, carbonated magnesium alkoxide derived procatalysts of sizes smaller than 15 µm have increased rates of reactor fouling, catalyst agglomeration, increased catalyst expenses, and increased likelihood of explosion owing to the small size of the polymer powders produced from the of carbonated magnesium alkoxide derived catalyst. Thus, it is desirable to develop a procatalyst which avoids the problems of both of these systems.

### BRIEF DESCRIPTION OF THE FIGURES

Figure 1 is the particle size distribution of a polymer produced in a liquid phase polymerization with the Catalyst of Example 1.

Figure 2 is the particle size distribution of a polymer produced in a liquid phase polymerization with the Catalyst of Example 2.

Figure 3 is the particle size distribution of a polymer produced in a liquid phase polymerization with the Catalyst of Comparative Example 1.

### SUMMARY OF THE INVENTION

In accordance with one aspect of the invention, there is provided a new procatalyst that can be used in the production of olefin polymerization catalysts which are a mixture of magnesium alkoxide or aryloxide species and carbonated magnesium alkoxide or aryloxide species. Polymer obtained from catalyst derived from this new procatalyst, exhibits increased bulk density and polymer flowability.

Additionally, there is provided a process for obtaining the new procatalyst by contacting a titanium containing compound, a halogen containing compound and the procatalyst precursor mixture. The invention further provides a catalyst system which contains an organometallic cocatalyst, a selectivity control agent and the previously described procatalyst. The invention also provides for polymerization processes employing this catalyst system and the polymer produced from this process.

### DETAILED DESCRIPTION OF THE INVENTION

Polymer produced in accordance with these processes exhibits an increase in bulk density and improvement in flowability over polymer comparably produced using a catalyst derived from a magnesium alkoxide or aryloxide only procatalyst precursor. The bulk density of the resulting polymer is greater than or equal to about 0.35 g/cc and, more preferably, greater than about 0.38 g/cc. The most notable effect of this increased bulk density is an increase in flowability to the extruder which resulted in an increase in pelletization rates of production facilities employing the novel catalyst system, i.e., an increase of at least about 20 percent and preferably, about 30 to about 40 percent, over the use of a magnesium alkoxide alone. Compared to polymer produced using a catalyst derived from a carbonated magnesium alkoxide only procatalyst precursor, polymer produced employing the present novel catalyst system is not as prone to reactor fouling agglomeration, and is not as hazardous with regards to dust induced explosion otherwise experienced with small particles.

While not intending to be bound by any particular theory, it is believed that the broader the distribution of the catalyst particle size, the better packing of the polymer. Thus, (D₉₀-D₁₀)/D₅₀ is greater than or equal to 1.65, preferably greater than or equal to 1.72, more preferably greater than 2.0 wherein Dₙ is the particle size at n^{th} percentile of the particle size distribution.

The procatalyst precursor of the present invention consists primarily of a mixture of two magnesium containing compounds. The first compound is a magnesium alkoxide or aryloxide compound (hereinafter collectively referred to as "MA") characterized by the formula Mg(OR¹)(OR²) wherein R¹ and R² are hydrocarbyl groups having up to 12 carbon atoms. R¹ and R² may be the same or different. The MA starts with about 500 µm when the catalyst is made but breaks down to about 50 µm, so a broad particle size of MA may be used.

The second compound is a carbonated magnesium alkoxide or aryloxide compound (hereinafter collectively referred to as "CMA") characterized by the general formula Mg(OC(O)OR³)ₓ(OR⁴)₂₋ₓ wherein R³ and R⁴ are hydrocarbyl groups having up to 12 carbon atoms and x is a number from about 0.1 to about 2. R³ and R⁴ may be the same or different. Preferably, the MA and the CMA are magnesium diethoxide (Mg(OC₂H₅)₂) and carbonated magnesium ethoxide, 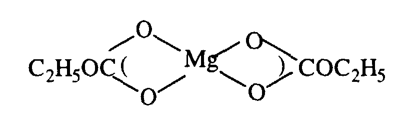 respectively. The CMA component of this mixture can be obtained by those methods known in the art, including those methods illustrated in U.S. Patent No. 5,411,926 to Wilson et al. Preferably, the CMA has a mean particle size of about 10 µm to about 35 µm, and most preferably about 15 µm. The procatalyst precursor mixture contains from about 20% to about 80% MA and from about 20% to about 80% CMA by weight based on magnesium weight percentages of the total magnesium in the precursor mixture.

The procatalyst of the present invention is formed by contacting the procatalyst precursor mixture with a titanium-containing compound and a halogen. The halogen-containing compound may be any of those known in the art for halogenating Mg-containing olefin polymerization catalysts. The Ti-containing compound may be any of those known in the art as Ti sources for olefin polymerization catalysts, including but not limited to titanium alkoxide, titanium alkoxy halides and titanium halides. It is preferable to mix the CMA and MA together before halogenation, but one can react them individually with TiCl₄ and then mix the halogenated MA and halogenated CMA. Optionally, but preferably, an internal electron donor is either present initially or added subsequently. This electron donor enhances the stereospecificity and catalytic activity of the resultant catalyst.

It is additionally preferred that a single compound act as both the titanium source and the primary halogen source. This is most readily accomplished by employing titanium halides, preferably, titanium tetrahalides, and most preferable, titanium tetrachloride (TiCl₄).

The formation of the procatalyst is optionally, but preferably, conducted at elevated temperatures in the presence of an inert diluent. If used, the only requirement for the inert diluent is that it does not participate in the reaction which forms the procatalyst. It is preferred that the optional diluent is a hydrocarbon or halohydrocarbon of up to 12 carbon atoms inclusive, more preferably of up to 9 carbon atoms inclusive. Exemplary hydrocarbons include isooctane, isopentane, benzene, and hexane. Preferably the hydrocarbon is a halohydrocarbon of up to 9 carbon atoms, inclusive, which contains at least one halogen atom, preferably chlorine or bromine, and in the case of an aliphatic halohydrocarbon contains at least two halogen atoms. Exemplary aliphatic halohydrocarbons are methylene chloride, methylene bromide, chloroform, carbon tetrachloride, 1,2-dibromoethane, 1,1,3-trichloropropane, trichlorocyclohexane, dichlorofluoromethane, and tetrachloroisooctane. Suitable aromatic halohydrocarbons include monochlorobenzene, bromobenzene, dichlorobenzene, and chlorotoluene. However, when titanium halides are used as the single source of titanium and halogen, and in particular when TiCl₄ is used, no inert diluent required since these halides are typically liquids.

The reaction is suitably conducted at a temperature or over a range of temperatures less than about 150°C. Heating increases the interaction between reactants. Therefore, a reaction temperature in the range of 70° to 130° C is preferred, with a temperature in the range of 75° to 130° C being more preferred. The actual duration of the reaction varies according to the reaction temperature, but usually the reaction is allowed to proceed from about 0.1 to about 6 hours, preferably from about 0.5 to about 3.5 hours. The resultant procatalyst is isolated from the solvent and excess halide (if present) by methods known in the art.

One result of the reaction which results in the formation of the procatalyst is the conversion of the two magnesium procatalyst precursor compounds into magnesium halides through a metathesis (i.e., digestion) mechanism. Preferably, the ratio of halogen to magnesium in the magnesium halide formed is at least 1.2:1. More preferred are reactions in which the magnesium is more completely halogenated. Ideally, the reaction leads to the formation of fully halogenated magnesium (i.e., to the formation of magnesium dihalides). To facilitate the formation of more fully halogenated magnesium halides, the procatalyst initially obtained can be subjected to subsequent washing steps with the titanium source and halogen source, which is preferably a single titanium halide, and which is even more preferably TiCl₄. Complete halogenation of the magnesium can be improved by the incorporation of a halogenated inert diluent of the type previously identified in the washing step or steps. The final procatalyst obtained from these steps is typically washed several times in an inert diluent to remove any suitable internal electron donors which are preferably present in the reaction leading to the formation of the procatalyst and, therefore, are included within the procatalyst are those conventionally employed as electron donors in titanium based olefin polymerization procatalysts. This class would include ethers, esters, ketones, amines, imines, nitrites, phosphines, stilbenes, arsines and alcoholates. Acceptable ethers include, but are not limited to, 2,2-diethyl 1,3 dimethoxy propane; 2,2 dipropyl, 1,3 dimethoxy propane, 2,2 diisobutyl, 1,3 dimethoxy and 2,2 dibutyl, 1,3 dimethoxy propane. Even more preferred internal electron donors are esters and particularly aliphatic esters of aromatic monocarboxylic and dicarboxylic acids. Examples of such preferred internal electron donors are methyl benzoate, propyl benzoate, butyl benzoate, p-ethoxy ethyl benzoate, p-methyl ethyl benzoate, diethyl phthalate, dipropyl phthalate, diisopropyl phthalate, dibutyl phthalate, and dimethyl naphthalene dicarboxylate. Of these esters used as internal electron donors, ethyl benzoate and diisobutyl phthalate are particularly preferred. A single compound can be used as the internal electron donor or a mixture of two or more compounds can be used as the internal electron donor.

In preferred procatalyst embodiments, a sufficient amount of internal electron donor is utilized so that the molar ratio of internal electron donor to magnesium in the procatalyst is in the range of 0.02:1 to 0.3: 1. Preferred ratios are in the range from 0.02 to 0.2:1.

Contacting the procatalyst precursor mixture with the preferred titanium tetrachloride preferably is conducted in an excess of the titanium compound. The molar ratio of the titanium compound to magnesium should be at least 2:1. Preferably a ratio in the range of 4:1 to 100:1 is employed. Even more preferred is a ratio in the range of 8:1 to 20:1.

The final procatalyst, preferably obtained after the washing step previously described, has a titanium content from about 0.5 % by weight to about 6.0 % by weight, preferably from about 2.0 % by weight to about 4.0 percent by weight. The procatalyst thus obtained is characterized by a lower average particle size than a comparable procatalyst derived from an magnesium alkoxide only procatalyst precursor. Compared to a procatalyst derived from a magnesium alkoxide only procatalyst precursor, the particle size distribution of the procatalyst prepared in accordance with the present invention is shifted to a lower range and the average particle size of the procatalyst is smaller, i.e., less than about 50 µm, more preferably less than about 30 µm.

Optionally, the procatalyst obtained by the procedures described above may be combined with an organometallic cocatalyst and an SCA to form the final olefin polymerization catalyst system. Organometallic cocatalysts which can be suitably employed in combination with the procatalyst of the present invention include those conventionally used in titanium based olefin polymerization catalyst systems. Alkyl groups from 2 to 6 carbon atoms are typically employed. The preferred organoaluminum compounds include trialkylaluminum, triethyl aluminum, triisobutyl aluminum, alkyl aluminum halides and triisopropyl aluminum. Of these, triethylaluminuin is particularly preferred. The cocatalyst is employed in quantity to ensure an aluminum to titanium ratio in the final catalyst system of from 1:1 to 300:1, preferably from about 10:1 to about 150:1.

SCA compounds which can be suitably employed in the final catalyst system those conventionally used in titanium based olefin polymerization catalyst systems. Suitable SCA compounds include those compounds previously indicated as suitable internal electron donors and also include ethers and silicon-containing compounds known in the art. Suitable silicon-containing compounds which can be employed as an SCA with the procatalyst of this include, but are not limited to, those compounds which can be characterized by the formula R⁵ₐR⁶_{b}Si(OR⁷)_{y}(OR⁸)_{z} wherein R⁵ and R⁶ are alkyl or aryl groups having up to 12 carbon atoms, R⁷ and R⁸ are alkyl groups having up to 4 carbon atoms; a + b + y + z = 4; 0 ≤ a + b ≤ 3; and 0 < y + z ≤ 4. Each R⁵, R⁶, R⁷, and R⁸ can be the same or different. Typical of this class are dicyclopentyl dimethoxy silane, diisobutyl dimethoxy silane, isopropyl trimethoxy silane, ethyl triethoxy silane, tetraethoxy silane, and n-propyl trimethoxy silane. Preferred SCA compounds include dicyclopentyl dimethoxy silane, n-propyl trimethoxy silane, ethyl benzoate, and p-ethoxy ethyl benzoate and those esters listed as internal electron donors previously herein. Particularly preferred is p-ethoxy ethyl benzoate.

The SCA is employed in a quantity sufficient to provide a molar ratio of SCA to titanium in the final catalyst system of from 0.01:1 to 100:1, preferably from about 0.5:1 to 70:1. Particularly preferred is a ratio from about 8:1 to about 50:1. The SCA can be used separately, or optionally it can be either partially or totally complexed with the organoaluminum

The final olefin polymerization catalyst having the procatalyst, cocatalyst and SCA can be prepared by any of the methods known in the art. These mixing the three components in a vessel outside the polymerization reactor, thus producing the final catalyst which is then introduced into the polymerization reactor. Alternatively, the three components can be introduced separately into the polymerization reactor, or two of the components can be mixed with each other (e.g., partially or totally complexing the SCA with the cocatalyst) prior to being introduced into the polymerization reactor with, prior to, or after the third component. As another alternative, the three catalyst components can be subjected to a prepolymerization step prior to their use in a final polymerization.

Olefin monomers that can be employed in the polymerization process can include one or more: C₂ to C₁₈ alpha olefins such as ethylene, propylene, and optionally at least one diene (such as those taught in U.S. Patent No. 5,317,036 to Brady et al.); for example, hexadiene, dicyclopentadiene, octadiene, norbornadiene, and ethylidene norbornene; readily condensable monomers such as those taught in U.S. Patent No. 5,453,471 including isoprene, styrene, butadiene, isobutylene, and chloroprene, acrylonitrile, cyclic olefins such norbornenes, and the like.

The process of the present invention can be used in conjunction with slurry, solution, bulk, and fluidized (stirred and/or gas phase) polymerizations. Preferably, it is employed in fluidized polymerizations, most preferably those utilizing a gas phase. The present invention is not limited to any specific type of fluidized or gas phase polymerization reaction and can be carried out in a single reactor or multiple reactors (two or more reactors in series). In addition to well known conventional gas phase polymerizations processes, "condensed mode", including the so-called "induced condensed mode", and "liquid monomer" operation of a gas phase polymerization can be employed.

A conventional fluidized bed process for producing resins is practiced by passing a gaseous stream containing one or more monomers continuously through a fluidized bed reactor under reactive conditions in the presence of a polymerization catalyst. Product is withdrawn from the reactor. A gaseous stream of unreacted monomer is withdrawn from the reactor continuously and recycled into the reactor along with make-up monomer added to the recycle stream. Conventional gas phase polymerizations are disclosed, for example, in U.S. Patent Nos. 3,922,322 and 4,035,560.

Condensed mode polymerizations are disclosed in U.S. Patent Nos. 4,543,399; 4,588,790; 5,352,749; and 5,462,999. Condensing mode processes are employed to achieve higher cooling capacities and, hence, higher reactor productivity. In these polymerizations a recycle stream, or a portion thereof, can be cooled to a temperature below the dew point in a fluidized bed polymerization process, resulting in condensing all or a portion of the recycle stream. The recycle stream is returned to the reactor. The dew point of the recycle stream can be increased by increasing the operating pressure of the reaction/recycle system and/or increasing the percentage of condensable fluids and decreasing the percentage of non-condensable gases in the recycle stream. The condensable fluid may be inert to the catalyst, reactants and the polymer product produced; it may also include monomers and comonomers. The condensing fluid can be introduced into the reaction/recycle system at any point in the system. Condensable fluids include saturated or unsaturated hydrocarbons. In addition condensable fluids of the polymerization process itself other condensable fluids, inert to the polymerization can be introduce to "induce" condensing mode operation. Examples of suitable condensable fluids may be selected from liquid saturated hydrocarbons containing 2 to 8 carbon atoms (e.g., ethane, propane, n-butane, isobutane, n-pentane, isopentane, neopentane, n-hexane, isohexane, and other saturated C₆ hydrocarbons, n-heptane, n-octane and other saturated C₇ and C₈ hydrocarbons, and mixtures thereof). Condensable fluids may also include polymerizable condensable comonomers such as olefins, alpha-olefins, diolefins, diolefins containing at least one alpha olefin, and mixtures thereof. In condensing mode, it is desirable that the liquid entering the fluidized bed is dispersed and vaporized quickly.

Liquid monomer polymerization mode is disclosed, in U.S. Patent No. 5,453,471, U.S. Serial No. 510,375, PCT 95/09826 (US) and PCT 95/09827 (US). When operating in the liquid monomer mode, liquid can be present throughout the entire polymer bed provided that the liquid monomer present in the bed is adsorbed on or absorbed in solid particulate matter present in the bed, such as polymer being produced or fluidization aids (e.g., carbon black) present in the bed, so long as there is no substantial amount of free liquid monomer present more than a short distance above the point of entry into the polymerization zone. In general, a liquid monomer process is conducted in a stirred bed or gas fluidized bed reaction vessel having a polymerization zone containing a bed of growing polymer particles. The process comprises continuously introducing a stream of one or more monomers and optionally one or more inert gases or liquids into the polymerization zone; continuously or intermittently introducing a polymerization catalyst into the polymerization zone; continuously or intermittently withdrawing polymer product from the polymerization zone; and continuously withdrawing unreacted gases from the zone; compressing and cooling the gases while maintaining the temperature within the zone below the dew point of at least one monomer present in the zone. If there is only one monomer present in the gas-liquid stream, there is also present at least one inert gas. Typically, the temperature within the zone and the velocity of gases passing through the zone are such that essentially no liquid is present in the polymerization zone that is not adsorbed on or absorbed in solid particulate matter.

Hydrogen may be used to control the molecular weight of the polymer without detriment to the stereospecificity or catalytic activity of the catalyst system. Polymerization may be conducted batchwise or continuously with constant or intermittent supply of the novel catalyst system or one or more of the catalyst components to the polymerization reactor. Activity and stereospecificity of the novel catalyst system is sufficient to obviate the removal of any catalyst residues.

Illustrative of the polymers which can be produced in accordance with the invention are the following: homopolymers and copolymers of C₂-C₁₈ alpha olefins, ethylene propylene rubbers (EPRs); ethylenepropylene diene rubbers (EPDMs); polyisoprene; polystyrene; polybutadiene; polymers of butadiene copolymerized with styrene; polymers of butadiene copolymerized with acrylonitrile; polymers of isobutylene copolymerized with isoprene; ethylene butene rubbers and ethylene butene diene rubbers; polychloroprene, norbornene homopolymers and copolymers with one or more C₂-C₁₈ alpha olefin, and the like.

All references cited herein are to be incorporated by reference.

The invention will now be described further with the aid of the following examples. However, the examples should in no way be construed as limiting the scope of the invention.

### EXAMPLE 1

A procatalyst precursor mixture comprising 60% magnesium ethoxide (Mg(OC₂H₅)₂) and 40% Mg(C(O)OC₂H₅)_{1.2}(OC₂H₅)_{0.8} (weight percentages based on the amount of magnesium) was stirred with 0.9 mL of ethyl benzoate in a volume of 55 mL of TiCl₄ (or a 50-50 by (vol/vol) mixture of TiCl₄ and chlorobenzene) for every 19 mmoles of total magnesium precursor for 1 hour at 110°C. The resulting mixture was filtered while hot and the solids recovered. An additional 60 mL portion of TiCl₄ was added to the solid and stirred 110°C at for 1 hour. The resulting slurry was filtered and again in another 60 mL portion of fresh TiCl₄. The resulting slurry was stirred at 110°C for 30 minutes. The recovered solid was rinsed six times with 125 mL portions of isooctane at room temperature, and then dried overnight under flowing nitrogen to obtain the final procatalyst. The procatalyst obtained above was combined with triethyl aluminum (TEAL) as a cocatalyst and p-ethoxy ethyl benzoate (PEEB) as an SCA to obtain an olefin polymerization catalyst system.

### EXAMPLE 2

A procatalyst was prepared in accordance with the procedures described in EXAMPLE 1 except that the procatalyst precursor mixture was comprised of 40% of the magnesium ethoxide and 60% of the magnesium carbonate of Example 1 based on Mg weight percent. The procatalyst obtained above was combined with TEAL as a cocatalyst and PEEB as an SCA to obtain an olefin polymerization catalyst system.

### COMPARATIVE EXAMPLE 1

A procatalyst was prepared in accordance with the procedures described in EXAMPLE 1 except that the procatalyst precursor was comprised entirely of the magnesium ethoxide. The same magnesium ethoxide source was used for both this COMPARATIVE EXAMPLE, EXAMPLE 1 and EXAMPLE 2. The procatalyst obtained above was combined with TEAL as a cocatalyst and PEEB as an SCA to obtain an olefin polymerization catalyst system.

### LIQUID PHASE POLYMERIZATION

The catalysts of the above examples were used to polymerize propylene in a liquid phase process in a single-stage slurried one-gallon reactor with 1375 g propylene as the diluent and H₂ at 32-43 mmol for one hour at 67°C with a molar ratio of 70/35/1 of Al/PEEB/Ti. The results are set forth in Table 1 below.

**TABLE 1**

| Property Evaluated | | Example 1 | Example 2 | Comparative Example 1 |
|---|---|---|---|---|
| Catalyst: | | | | |
| PSD¹ | Mean (µm) | 23 | 21 | 52 |
| | D10 (µm) | 7 | 3 | 19 |
| | D50 (µm) | 18 | 10 | 46 |
| | D90 (µm) | 38 | 31 | 95 |

| Polymer: | | | | |
|---|---|---|---|---|
| Bulk Density | g/cc | 0.38 | 0.39 | 0.33 |
| | | | | |
| Polymer PSD | WAPS² | 429 | 373 | 743 |
| | NAPS³ | 267 | 267.51 | 419 |
| | particles >1000 µm | 8.50% | 4.56% | 26.8% |
| | <100 µm | 4.44% | 3.06% | 3.40% |

| | | | | |
|---|---|---|---|---|
| ¹ Polymer Size Distribution | | | | |
| ² Weight Average Particle Size (µm) | | | | |
| ³ Number Average Particle Size (µm) | | | | |

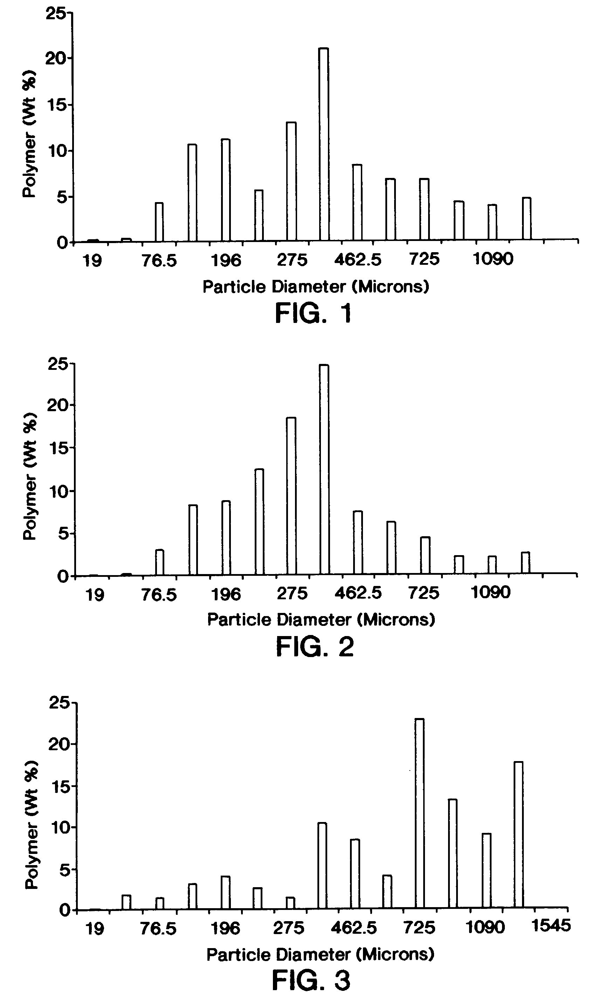

This data indicates that the catalyst of the present invention has a particle size range that conforms to a Gaussian distribution, rather than a tail-weighted distribution of large particle sizes, like the prior art catalyst. The catalyst of the present invention produced polymer with higher bulk density than polymer produced with prior art catalyst. Moreover, fewer polymer boulders (> 1000 µm) were produced during polymerization using the catalyst of the present invention, which enhanced polymer flowability through the two reactor system and the delivery of the polymer through the extruder. This resulted in higher extrusion rates for polymer made with catalyst from the present invention. See Figs. 1-3 for a graphical representation of same.

### SECOND POLYMERIZATION

The catalyst systems described above were employed to polymerize propylene in a two-phase gas phase polymerization process. No catalyst was added to the second reactor, only TEAL, but ethylene was added as a copolymer for the second reactor. The catalyst components were present at Ti:Al:PEEB molar ratio of 1:45:25. The reactor conditions were as follows:

**TABLE 2**

| | | |
|---|---|---|
| Reactor One | H₂/C₃ molar ratio | .042 |
| | P (kg/cc) | 28.897 |
| | Partial Pressure C₃ (kg/cc) | 26.788 |
| | Temperature (°C) | 65 |
| Reactor Two | C₃/C₂ molar ratio | 1.60-1.80 |
| | H₂/C₂ molar ratio | .15 to .20 |

**TABLE 3**

| **Catalyst:** | **Example 1 Catalyst** | **Example 2 Catalyst B** | **Comparative Example Catalyst** |
|---|---|---|---|
| Relative Reactor 1* Bulk Density | 1.12 | 1.18 | 1.0 |
| Relative Reactor 2* Bulk Density | 1.06 | 1.0 | 1.0 |
| Relative Extrusion Rate | 1.3 | 1.4 | 1.0 |

| | | | |
|---|---|---|---|
| * - compared vs. standard catalyst. | | | |

This data indicates the bulk density and extrusion rate of the polymer produced in accordance with the present invention were superior to that produced in the prior art.

## Claims

1. A composition comprising:
a) a magnesium alkoxide or aryloxide compound of the formula Mg(OR¹)(OR²) wherein R¹ and R² are hydrocarbyl groups having up to 12 carbon atoms and each R¹ and R² may be the same or different; and
b) a carbonated magnesium alkoxide or aryloxide compound of the formula Mg(OC(O)OR³)ₓ(OR⁴)₂₋ₓ wherein R³ and R⁴ are hydrocarbyl groups having up to 12 carbon atoms, x is from 0.1 to 2 and each R³ and R⁴ may be the same or different,
where component (a) is present in an amount of from 20 to 80 weight percent magnesium based on the total weight of magnesium in the composition.

2. A composition as claimed in claim 1 which is reacted with a titanium halide.

3. A composition as claimed in claim 2 wherein: (i) component(a),(ii) component(b), or (iii) both components (a) and (b) have been reacted with a titanium halide prior to combination.

4. A composition as claimed in claim 2 or claim 3 wherein the titanium halide is titanium tetrachloride.

5. A composition as claimed in any one of the preceding claims wherein the magnesium alkoxide or aryloxide compound is magnesium ethoxide.

6. A composition as claimed in any one of the preceding claims wherein the carbonated magnesium alkoxide or aryloxide compound is carbonated magnesium ethoxide.

7. A composition as claimed in any one of the preceding claims additionally comprising an internal electron donor and an external selectivity control agent.

8. Polypropylene whenever produced using the composition as claimed in any one of the preceding claims as the polymerization catalyst.

9. A process for the preparation of a catalyst comprising:
(i) reacting (a) a magnesium alkoxide or aryloxide compound of the formula Mg(OR¹)(OR²) wherein R¹ and R² are hydrocarbyl groups having up to 12 carbon atoms and each R¹ and R² may be the same or different, with (b) a titanium halide; and
(ii) reacting (a) a carbonated magnesium alkoxide or aryloxide compound of the formula Mg(OC(O)OR³)ₓ(OR₄)₂ₓ wherein R³ and R⁴ are hydrocarbyl groups having up to 12 carbon atoms, x is a number from 0.1 to 2 and each R3 and R4 may be the same or different, with (b) a titanium halide,
where the reactions of steps (i) and (ii) may be conducted together or separately, provided that if the reactions are conducted separately, the process includes the additional step of combining the reaction products of steps (i) and (ii).

10. A composition comprising:
(a) the reaction product of
(i) a magnesium alkoxide or aryloxide compound of the formula Mg(OR¹)(OR²) wherein R¹ and R² are hydrocarbyl groups having up to 12 carbon atoms and each R¹ and R² may be the same or different; and (ii) a titanium halide; and
(b) the reaction product of
(i) a carbonated magnesium alkoxide or aryloxide compound of the formula Mg(OC(O)OR³)ₓ(OR⁴)₂₋ₓ wherein R³ and R⁴ are hydrocarbyl groups having up to 12 carbon atoms, x is from 0.1 to 2 and each R³ and R⁴ may be the same or different; and
(ii) a titanium halide.
wherein component (a) is present in an amount of from 20 to 80 weight percent magnesium based on the total weight of magnesium in the composition.
